# EUROPÄISCHE PATENTSCHRIFT

(11) **EP 4 184 127 B1**
(45) Veröffentlichungstag und Bekanntmachung des Hinweises auf die Patenterteilung: **03.01.2024**
(21) Anmeldenummer: 21208708.4
(22) Anmeldetag: 17.11.2021
(51) Int. Cl.: G01F 1/66, G01F 1/667, G01F 15/18

(54) **DURCHFLUSSMESSEINRICHTUNG MIT GEHÄUSE UND MESSEINSATZ**
FLOW MEASURING DEVICE WITH HOUSING AND MEASURING INSERT
DISPOSITIF DE MESURE DE DÉBIT POURVU DE BOÎTIER ET D'INSERT DE MESURE

(43) Veröffentlichungstag der Anmeldung: 24.05.2023
(73) Patentinhaber: Landis+Gyr GmbH, 90459 Nürnberg (DE)
(72) Erfinder: Sturek, Robert, 69242 Mühlhausen (DE); Moßner, Johannes, 91315 Höchstadt (DE)
(74) Vertreter: Marks & Clerk LLP

(56) Entgegenhaltungen:
- EP-A1- 3 454 018
- EP-A2- 2 410 299
- CN-A- 105 953 851
- CN-A- 110 849 431

## Beschreibung

Die Erfindung betrifft eine Durchflussmesseinrichtung für ein flüssiges oder gasförmiges Medium mit einem Gehäuse und einem in das Gehäuse einsetzbaren und eine Messtrecke aufweisenden Messeinsatz, wobei der Messeinsatz eine Durchflussrichtung hat, in der das zu erfassende Medium während des Betriebs die Messstrecke durchströmt, und das Gehäuse eine Gehäuse-Innenwand aufweist.

Solche Durchflussmesseinrichtungen sind beispielsweise aus der EP 2 988 103 B1, der EP 2 770 304 B1 sowie aus der EP 2 410 299 A2 bekannt. Diese sowie andere bekannte derartige Durchflussmesseinrichtungen basieren insbesondere auf der (Ultra-)Schallmesstechnik. Bei einem solchen Gerät werden impulsförmige (Ultra-)Schallsignale mittels (Ultra-)Schallwandler erzeugt, um dann in Flussrichtung und entgegen der Flussrichtung durch das Medium gesendet zu werden. Der Unterschied der Laufzeiten der Schallsignale in beiden Laufrichtungen wird zur Ermittlung der Durchflussmenge bzw. -rate des Mediums ausgewertet. Diese (ultra-)schallbasierten Durchflussmesseinrichtungen arbeiten nach dem Laufzeitdifferenzprinzip.

Es gibt verschiedene Ausgestaltungen. Zum einen sind Durchflussmesseinrichtungen im eigentlichen Sinne bekannt, welche ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit einer zusätzlich über ein Temperaturfühlerpaar ermittelten Temperaturdifferenz im Vor- und Rücklauf in Verbindung gebracht wird, um so die über das Medium zugeführte (Wärme- oder Kälte-) Energie zu bestimmen.

Auch derartige Energiezähler sind hier als - speziell ausgestaltete - Durchflussmesseinrichtungen zu verstehen.

Zur Montage ist der Messeinsatz bei der Durchflussmesseinrichtung gemäß der EP 2 988 103 B1 längs der Durchflussrichtung ausgehend von der Öffnung an einer der beiden stirnseitigen Anschlussstellen in das Gehäuse einschiebbar. Bei der Durchflussmesseinrichtung gemäß der EP 2 770 304 B1 ist der Messeinsatz dagegen in eine in der seitlichen Gehäusewand vorgesehene gesonderte Montageöffnung einsetzbar. In beiden Fällen gestaltet sich die entsprechende Bearbeitung des Gehäuses und/oder die Montage des Messeinsatzes aufwändig.

In der EP 2 410 299 A2 wird ein Gehäuse für eine Ultraschall-Messeinrichtung zur Messung eines Fluidflusses beschrieben. Das Gehäuse hat zwei im Bereich der Messtrecke verbundene und/oder verbindbare, getrennt hergestellte Gehäuseteile. Innerhalb des Gehäuses ist ein Messrohr aufgenommen, welches an einer Gehäuse-Innenwand des Gehäuses gehaltert ist.

Die Aufgabe der Erfindung besteht deshalb darin, eine Durchflussmesseinrichtung der eingangs bezeichneten Art mit gegenüber dem Stand der Technik verbesserten Eigenschaften anzugeben.

Zur Lösung dieser Aufgabe wird eine Durchflussmesseinrichtung entsprechend den Merkmalen des Patentanspruchs 1 angegeben. Bei der erfindungsgemäßen Durchflussmesseinrichtung handelt es sich um eine solche, bei der die Gehäuse-Innenwand mit einer senkrecht zur Durchflussrichtung verlaufenden Gehäuse-Montagenut ausgestattet ist, der Messeinsatz eine Messeinsatz-Außenwand aufweist, und die Messeinsatz-Außenwand mit einer senkrecht zur Durchflussrichtung verlaufenden Messeinsatz-Montagenut ausgestattet ist, und das Gehäuse und der Messeinsatz im montierten Zustand zumindest in Durchflussrichtung relativ zueinander ausgerichtet sind und mittels eines Sicherungselements in der zueinander ausgerichteten Position fixiert sind, wobei zur Fixierung des Gehäuses und des Messeinsatzes in der zueinander ausgerichteten Position zumindest ein erster Teilbereich des Sicherungselements in die Gehäuse-Montagenut und zumindest ein zweiter Teilbereich des Sicherungselements in die Messeinsatz-Montagenut eingreift.

Das Gehäuse kann auch als Armatur bezeichnet oder verstanden werden.

Der montierte Zustand liegt hier insbesondere dann vor, wenn der Messeinsatz ordnungsgemäß und betriebsbereit in das Gehäuse eingesetzt ist.

Die Durchflussrichtung ist die Richtung, in der das zu erfassende Medium den Messeinsatz während des Betriebs durchströmt. Sie wird hier auch als axiale Richtung bezeichnet. Die Durchflussmesseinrichtung sowie insbesondere ihre beiden Bestandteile Gehäuse und Messeinsatz können zumindest bereichsweise bevorzugt jeweils eine im Wesentlichen (hohl-)zylindrische Form aufweisen, welche wie jede Zylindergeometrie oder jedes Zylinderkoordinatensystem neben der axialen Richtung auch eine tangentiale Richtung (= Umfangsrichtung) sowie eine radiale Richtung hat. Die tangentiale Richtung dieser (hohl-)zylindrischen Form ist bei dieser möglichen Ausgestaltung insbesondere die angesprochene zur Durchflussrichtung senkrechte Richtung.

Das Sicherungselement ist insbesondere elastisch federnd und bevorzugt ein Schnappring mit vorzugsweise runder Geometrie. Letzteres gilt beispielsweise bei der im Wesentlichen zylindrischen Ausgestaltung der Durchflussmesseinrichtung, also insbesondere ihrer beiden Bestandteile Gehäuse und Messeinsatz.

Bei der erfindungsgemäßen Durchflussmesseinrichtung ist eine besonders einfache und trotzdem sehr wirksame Ausrichtung und Fixierung des Messeinsatzes im Gehäuse gegeben. Die hierfür erforderliche Bearbeitung und/oder Herstellung des Messeinsatzes und des Gehäuses ist vergleichsweise einfach und kostengünstig zu bewerkstelligen. Die Messeinsatz-Montagenut und die Gehäuse-Montagenut können ohne weiteres und insbesondere ohne großen Aufwand eingebracht werden. Dies gilt sowohl bei der anfänglichen Herstellung von Messeinsatz und Gehäuse als auch bei einem nachträglichen Einbringen einer der beider Montagenuten in einen schon existierenden Messeinsatz oder in ein schon existierendes Gehäuse.

Die Messeinsatz-Montagenut und/oder die Gehäuse-Montagenut können insbesondere ein rechteckiges, ein polygonförmiges, ein trapezförmiges oder ein gewölbtes Nut-Querschnittsprofil haben. Das darin eingesetzte Sicherungselement kann vorzugsweise ein zum jeweiligen Nut-Querschnittsprofil korrespondierendes Element-Querschnittsprofil haben. Ein polygonförmiges oder trapezförmiges Nut-Querschnittsprofil eignet sich bevorzugt für das nachträgliche Einbringen in schon existierende Bauteile. Es lässt sich ohne großen Aufwand nachträglich einbringen, insbesondere auch in eine Hohlraum-Innenwand, und vorzugsweise auch in eine im Wesentlichen hohlzylindrische Innenwand.

Weiterhin lässt sich auch der zur Ausrichtung und Fixierung vorgesehene Eingriff des Sicherungselements mit zumindest einem ersten Teilbereich in die Gehäuse-Montagenut und mit zumindest einem zweiten Teilbereich in die Messeinsatz-Montagenut ebenfalls ohne weiteres und insbesondere ohne großen Aufwand realisieren. Das Sicherungsmittel bewirkt vorteilhafterweise sowohl die relative Ausrichtung zueinander als auch die Fixierung. Die relative Ausrichtung des Gehäuses und des Messeinsatzes zueinander sowie deren Fixierung relativ zueinander erfolgt dabei insbesondere nur mindestens mittels des Sicherungselements. Weitere Ausrichtungs- und/oder Fixierungsmittel können zusätzlich vorhanden sein.

Auch die Montage der Durchflussmesseinrichtung ist sehr einfach. So lässt sich der Messeinsatz insbesondere von beiden axialen Stirnseiten aus in das vorzugsweise im Wesentlichen zylinderförmige Gehäuse einführen. Das bereichsweise Fügen des insbesondere am Messeinsatz in die Messeinsatz-Montagenut eingesetzten Sicherungselements (beispielsweise in Form eines Schnapprings) in die Gehäuse-Montagenut ist einfach und schnell möglich. Der Eingriff des Sicherungselements in die Messeinsatz-Montagenut sowie in die Gehäuse-Montagenut stellt insbesondere jeweils eine Formschlussverbindung dar. Die Montage mittels des Sicherungselements hat keinen Einfluss auf die Strömungsverhältnisse innerhalb der Messtrecke im Messeinsatz. Es resultieren dort insbesondere keine unerwünschten Störkanten, die andernfalls die Strömung beeinträchtigen könnten. Weiterhin ist keine gesonderte Abdichtung des Sicherungselements hin zur Außenseite des Gehäuses erforderlich, was zu einem einfacheren und kostengünstigeren Aufbau führt.

Das Gehäuse kann insbesondere aus einem Metall, beispielsweise aus Messing, oder aus einem Kunststoff bestehen. Der Messeinsatz besteht insbesondere aus einem Kunststoff. Vorteilhafterweise bleibt der Messeinsatz baugleich, unabhängig davon, ob er in Verbindung mit einem Metall-Gehäuse oder mit einem Kunststoff-Gehäuse verwendet wird.

Vorteilhafte Ausgestaltungen der erfindungsgemäßen Durchflussmesseinrichtung ergeben sich aus den Merkmalen der von Anspruch 1 abhängigen Ansprüche.

Günstig ist eine Ausgestaltung, bei der die Gehäuse-Montagenut zumindest in einem abgeflachten Bereich der Gehäuse-Innenwand angeordnet ist. Die Gehäuse-Innenwand weist abgesehen von dem abgeflachten Bereich insbesondere eine im Wesentlichen hohlzylindrische Form auf, wobei sich der abgeflachte Bereich bevorzugt nach innen hin erstreckt und damit den freien Durchgangsbereich verglichen mit einer exakt hohlzylindrischen Gehäuse-Innenwand verkleinert. Der Messeinsatz hat insbesondere eine zum abgeflachten Bereich der Gehäuse-Innenwand korrespondierende Abflachung an seiner Messeinsatz-Außenwand. Bei der im Wesentlichen zylindrischen Ausgestaltung der Durchflussmesseinrichtung bewirken der abgeflachte Bereich der Gehäuse-Innenwand in Verbindung mit der korrespondierenden Abflachung am Messeinsatz auch, dass der Messeinsatz nur in der gewünschten Verdrehstellung in das Gehäuse eingesetzt werden kann. Auf diese Weise sind das Gehäuse und der Messeinsatz im montierten Zustand vorteilhafterweise auch in tangentialer Richtung (= Richtung einer Rotation um die axiale Richtung (= Durchflussrichtung)) relativ zueinander ausgerichtet und in der zueinander ausgerichteten tangentialen Position fixiert. Dadurch, dass in dem abgeflachten Bereich der Gehäuse-Innenwand auch die Gehäuse-Montagenut angeordnet ist, hat der abgeflachte Bereich insbesondere eine vorteilhafte Doppelfunktion. Er trägt dann zur Ausrichtung und Fixierung des Gehäuses und des Messeinsatzes relativ zueinander sowohl in axialer Richtung als auch in tangentialer Richtung bei. Bei einer optionalen besonders günstigen Ausgestaltung kann sich die Gehäuse-Montagenut insbesondere ausschließlich in dem abgeflachten Bereich der Gehäuse-Innenwand befinden. Dann ergibt sich ein besonders einfacher Aufbau.

Gemäß einer weiteren günstigen Ausgestaltung umgibt die Messeinsatz-Montagenut den Messeinsatz in einer Richtung senkrecht zur Durchflussrichtung zumindest teilweise. Bei einer optionalen Ausgestaltung kann die Messeinsatz-Montagenut den Messeinsatz in der genannten Richtung insbesondere auch vollständig umgeben. Dann ist das Sicherungselement besonders gut an der Außenseite des Messeinsatzes verankert. Bei der genannten Richtung kann es sich wiederum um die tangentiale Richtung handeln, wenn die Durchflussmesseinrichtung im Wesentlichen zylindrisch ausgestaltet ist.

Gemäß einer weiteren günstigen Ausgestaltung umgibt das Sicherungselement die Messtrecke in einer Richtung senkrecht zur Durchflussrichtung, insbesondere in tangentialer Richtung. Abgesehen von einem insbesondere am Sicherungselement vorgesehenen Öffnungsspalt, mittels dessen das Sicherungselement über die Messeinsatz-Außenwand platzierbar ist, umgibt das Sicherungselement die Messtrecke insbesondere im Wesentlichen vollständig. Auch dies führt zu einer besonders guten Verankerung des Sicherungselements an der Außenseite des Messeinsatzes. Der insbesondere vorgesehene Öffnungsspalt erleichtert die Montage des Sicherungselements an oder auf dem Messeinsatz. Das so geschlitzte Sicherungselement kann aufgebogen und direkt im Bereich der Messeinsatz-Montagenut über die Messeinsatz-Außenwand geschoben werden. Alternativ kann das Sicherungselement auch in axialer Richtung über die Messeinsatz-Außenwand bis zur Position der Messeinsatz-Montagenut geschoben werden. Bei dieser zweiten Montagevariante wird das mit dem Öffnungsspalt versehene geschlitzte Sicherungselement nur geringfügig aufgeweitet oder aufgepresst, was die Montage erleichtert. Insbesondere kann die Montage des Sicherungselements an oder auf dem Messeinsatz auch nachträglich erfolgen.

Gemäß einer weiteren günstigen Ausgestaltung weist das Sicherungselement Sicherungselement-Teilbereiche mit unterschiedlicher Elementdicke auf. Somit kann jeder Sicherungselement-Teilbereich eine andere Funktion wahrnehmen. Die jeweilige Elementdicke in den Sicherungselement-Teilbereichen richtet sich dann insbesondere nach der dem betreffenden Sicherungselement-Teilbereich zugeordneten Funktion. Bei der im Wesentlichen zylindrischen Ausgestaltung der Durchflussmesseinrichtung kann das Sicherungselement vorzugsweise als im wesentlichen runder Schnappring ausgeführt sein, der ebenfalls die Sicherungselement-Teilbereiche mit unterschiedlicher Elementdicke haben kann. Die bereichsweise unterschiedliche Dicke des Schnapprings stellt eine Abweichung von einer exakt kreisrunden Geometrie dar. Die Elementdicke erstreckt sich dann vorzugsweise in radialer Richtung. Die radiale Richtung ist senkrecht zur axialen Richtung (= Durchflussrichtung) orientiert.

Gemäß einer weiteren günstigen Ausgestaltung weist das Sicherungselement mindestens einen ersten Dicken-Teilbereich mit einer kleineren Elementdicke und mindestens einen zweiten Dicken-Teilbereich mit einer größeren Elementdicke auf. Der dünnere erste Dicken-Teilbereich führt hauptsächlich zu einem elastisch federnden Verhalten des Sicherungselements, wohingegen der dickere zweite Dicken-Teilbereich eher zur Fixierung des Sicherungselements an bzw. in den Montagenuten des Gehäuses und des Messeinsatzes bestimmt ist. Insbesondere wechseln sich die ersten und zweiten Dicken-Teilbereiche ab. Bevorzugt sind die ersten und zweiten Dicken-Teilbereiche in einer Richtung senkrecht zur Durchflussrichtung, insbesondere in tangentialer Richtung, gleichmäßig verteilt angeordnet. Damit kommen die in den jeweiligen Dicken-Teilbereichen hauptsächlich hervorgerufenen Wirkungen auch bei Betrachtung des Sicherungselements insgesamt besonders effizient zur Geltung. Insbesondere weist das Sicherungselement genau zwei erste Dicken-Teilbereiche und genau zwei zweite Dicken-Teilbereiche auf. Dies ist ein einfacher Aufbau, der sowohl die Federungswirkung als auch die Fixierungswirkung zuverlässig bietet. Die Elementdicke des dünneren ersten Dicken-Teilbereichs unterscheidet sich von der des dickeren zweiten Dicken-Teilbereichs insbesondere um einen Faktor von 1,5 bis 3, vorzugsweise von 1,75 bis 2,5 und bevorzugt von etwa 2. Die Elementdicke des dickeren zweiten Dicken-Teilbereichs ist um diesen Faktor größer als die des dünneren ersten Dicken-Teilbereichs.

Gemäß einer weiteren günstigen Ausgestaltung hat die Messeinsatz-Außenwand zumindest eine zusätzliche in Durchflussrichtung (= axiale Richtung) verlaufende Messeinsatz-Axialnut und das Sicherungselement zumindest einen in Durchflussrichtung verlaufenden zusätzlichen Sicherungselement-Positionierungssteg, wobei bei am Messeinsatz platzierten Sicherungselement der zumindest eine Sicherungselement-Positionierungssteg in die zumindest eine Messeinsatz-Axialnut eingreift, so dass sich das Sicherungselement in einer senkrecht zur Durchflussrichtung, insbesondere tangential, ausgerichteten und fixierten Position auf dem Messeinsatz befindet. Hierdurch wird sichergestellt, dass sich das Sicherungselement nicht versehentlich innerhalb der Messeinsatz-Montagenut verschiebt.

Gemäß einer weiteren günstigen Ausgestaltung hat die Gehäuse-Innenwand zumindest eine zusätzliche in Durchflussrichtung verlaufende Gehäuse-Axialnut, die Messeinsatz-Außenwand zumindest eine zusätzliche in Durchflussrichtung verlaufende Messeinsatz-Axialnut und das Sicherungselement zumindest einen in Durchflussrichtung verlaufenden zusätzlichen Sicherungselement-Positionierungssteg, wobei in der zueinander ausgerichteten und fixierten Position des Gehäuses und des Messeinsatzes zumindest ein Teil des zumindest einen Sicherungselement-Positionierungsstegs jeweils in die zumindest eine Gehäuse-Axialnut und in die zumindest eine Messeinsatz-Axialnut eingreift, so dass das Gehäuse und der Messeinsatz auch senkrecht zur Durchflussrichtung, insbesondere tangential, zueinander ausgerichtet und fixiert sind. Dabei liegen insbesondere entsprechende Tangentialflanken der Gehäuse-Axialnut und der Messeinsatz-Axialnut einerseits sowie des zumindest einen Sicherungselement-Positionierungsstegs andererseits aneinander an und bewirken somit die vorteilhafte zusätzliche Ausrichtung und Fixierung des Gehäuses und des Messeinsatzes relativ zueinander in einer Richtung senkrecht zur Durchflussrichtung. Letztere ist bei der im Wesentlichen zylindrischen Ausgestaltung der Durchflussmesseinrichtung wiederum insbesondere die tangentiale Richtung. Abgesehen von dem zumindest einen Sicherungselement-Positionierungssteg umgibt das Sicherungselement die Messtrecke bei der zylindrischen Ausgestaltung insbesondere tangential.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Durchflussmesseinrichtung mit einem Gehäuse und einem darin eingesetzten und mittels eines Sicherungselements fixierten Messeinsatzes in einer Längsschnittdarstellung,
- Fig. 2: eine Darstellung des Querschnitts II - II gemäß Fig. 1,
- Fig. 3: eine Darstellung des Querschnitts III - III gemäß Fig. 1,
- Fig. 4: eine Darstellung des Querschnitts IV - IV gemäß Fig. 1,
- Fig. 5: ein Ausführungsbeispiel eines Sicherungselements mit zusätzlichen Positionierungsstegen in perspektivischer Darstellung,
- Fig. 6: der in Fig. 1 mit VI gekennzeichnete Ausschnitt in vergrößerter Darstellung eines zweiten Ausführungsbeispiels einer Durchflussmesseinrichtung unter Verwendung des Sicherungselements gemäß Fig. 5, und
- Fig. 7: der in Fig. 1 mit VII gekennzeichnete Ausschnitt in vergrößerter Darstellung eines dritten Ausführungsbeispiels einer Durchflussmesseinrichtung unter Verwendung des Sicherungselements gemäß Fig. 5.

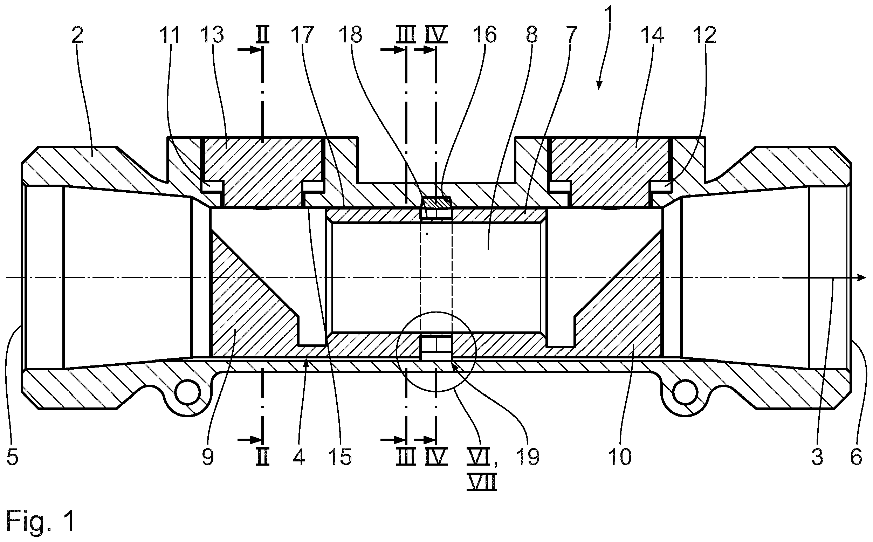

Einander entsprechende Teile sind in den Fig. 1 bis 7 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 bis 4 ist ein Ausführungsbeispiel einer Durchflussmesseinrichtung 1 zur Erfassung der Durchflussmenge eines durch ein Gehäuse 2 strömenden Mediums dargestellt. Gemäß der in Fig. 1 gezeigten Längsschnittdarstellung durchströmt das Medium während des Betriebs das Gehäuse 2 in der durch den Pfeil angedeuteten Durchflussrichtung 3. Das Gehäuse 2 ist bei dem gezeigten Ausführungsbeispiel als gesondertes Armaturengehäuse ausgebildet, das in ein von dem zu erfassenden Medium durchflossenes Rohrleistungssystem einzubauen ist. Grundsätzlich ist aber auch eine alternative Ausgestaltung möglich, bei der das Gehäuse kein gesondertes Bauteil ist, sondern als ein Rohrabschnitt des Rohrleistungssystems ausgebildet ist. Das Gehäuse 2 besteht bei dem gezeigten Ausführungsbeispiel aus Kunststoff. Es ist ein Spritzgussteil. Bei einem alternativen Ausführungsbeispiel kann es auch aus einem Metall, wie z.B. Messing, bestehen.

Die Durchflussmesseinrichtung 1 ist ultraschallbasiert und beruht auf dem Laufzeitdifferenzprinzip. Das in Fig. 1 gezeigte Ausführungsbeispiel ist zur Erfassung der Durchflussmenge des Mediums ausgelegt. Dies ist allerdings nicht einschränkend zu verstehen. Die Durchflussmesseinrichtung 1 kann nämlich grundsätzlich auch Bestandteil einer kombinierten Erfassungseinheit, beispielsweise zur Erfassung einer über das Rohrleistungssystem zugeführten Menge an Wärme- oder Kälteenergie sein. Dazu sind zwei in Fig. 1 nicht dargestellte zusätzliche Temperatursensoren zur Erfassung einer Temperaturdifferenz zwischen Vor- und Rücklauf vorgesehen. Ein so ausgebildeter Wärme- oder Kältezähler erfasst dann die über das in dem Rohrleistungssystem angelieferte und verbrauchte Wärme- oder KälteEnergie. Im Folgenden wird ohne Einschränkung der Allgemeingültigkeit nur auf die Erfassung der Durchflussmenge des Mediums eingegangen.

Die Durchflussmesseinrichtung 1 umfasst einen bei Bedarf auch austauschbaren Messeinsatz 4, der in das Gehäuse 2 eingesetzt ist. Das Einsetzen erfolgt insbesondere mittels Einschiebens in das Gehäuse 2 durch die vordere Anschlussöffnung 5 in Durchflussrichtung 3 oder durch die hintere Anschlussöffnung 6 entgegen der Durchflussrichtung 3.

Der Messeinsatz 4 hat einen zentralen Hauptabschnitt 7, der die eigentliche Messstrecke 8 in Form eines während des Betriebs von dem zu erfassenden Medium durchflossenen im Wesentlichen zylindrischen Hohlraums umfasst. Außerdem hat der Messeinsatz 4 einen in Durchflussrichtung 3 gesehen eingangsseitigen Umlenkhalter 9 und einen in Durchflussrichtung 3 gesehen ausgangsseitigen Umlenkhalter 10. Die Umlenkhalter 9 und 10 tragen jeweils einen nicht näher gezeigten Umlenkspiegel. Der zentrale Hauptabschnitt 8 und die beiden Umlenkhalter 9, 10 bestehen aus Kunststoff, insbesondere aus einem thermoplastischen Kunststoff, vorzugsweise aus PPA. Die beiden Umlenkhalter 9 und 10 sind jeweils fest an den zentralen Hauptabschnitt 7 angeformt, beispielsweise angespritzt, der eingangsseitige Umlenkhalter 9 an einer ersten axialen Stirnseite des zentralen Hauptabschnitts 7 und der ausgangsseitige Umlenkhalter 10 an einer der ersten axialen Stirnseite in Durchflussrichtung 3 gegenüberliegenden zweiten axialen Stirnseite des zentralen Hauptabschnitts 7. Mit "axial" ist hier eine Richtung in Durchflussrichtung 3 oder parallel zur Durchflussrichtung 3 bezeichnet. Der Messeinsatz 4 erstreckt sich in einer Längsrichtung, die gleich der oder parallel zu der Durchflussrichtung 3 ist. Die Durchflussmesseinrichtung 1 hat eine im Wesentlichen zylindrische Form. Dies gilt auch für das Gehäuse 2 und den zentralen Hauptabschnitt 7 des Messeinsatzes 4.

Die verschiedenen Bestandteile des Messeinsatzes 4, also der die eigentliche Messtrecke 8 umfassende zentrale Hauptabschnitt 7 und die beiden Umlenkhalter 9, 10 mit den Umlenkspiegeln bilden ein einziges gemeinsames Bauteil.

Das Gehäuse 2 hat in seiner Wand zwei durchgehende Aufnahmeöffnungen 11 und 12, in die jeweils ein Ultraschallwandler 13 bzw. 14 eingesetzt ist. Die Ultraschallwandler 13 und 14 können mit ihrem jeweiligen unteren Ende wie in Fig. 1 angedeutet in etwa bündig mit einer Gehäuse-Innenwand 15 des Gehäuses 2 abschließen. Bei einem alternativen Ausführungsbeispiel können sie aber auch mit ihrem unteren Ende ein Stück weit in den Innenraum des Gehäuses 2 hineinragen, wodurch eine (zusätzliche) axiale Fixierung des Messeinsatzes 4 innerhalb des Gehäuses 2 gegeben ist. Eine weitere ebenfalls nicht gezeigte axiale Fixierung des Messeinsatzes 4 innerhalb des Gehäuses 2 lässt sich optional und vorzugsweise durch einen z.B. an der Gehäuse-Innenwand gesondert angebrachten Endanschlag erreichen, gegen den der Messeinsatz 4 beim Einführen von einer der beiden Anschlussöffnungen 5, 6 aus geschoben wird.

Die Durchflussmesseinrichtung 1 arbeitet bidirektional. Die Ultraschallwandler 13 und 14 sind jeweils zum Senden und Empfangen eines Schallsignals ausgelegt. Die Ultraschallwandler 13 und 14 sind so in die Aufnahmeöffnungen 11 und 12 eingesetzt, dass das von ihnen erzeugte oder empfangene Schallsignal im Wesentlichen senkrecht zur Durchflussrichtung 3 an ihrem besagten unteren Ende ausgesendet bzw. empfangen wird.

In zur Durchflussrichtung 3 senkrechter (= radialer) Richtung ist benachbart zu jedem der beiden Ultraschallwandler 13 und 14 jeweils einer der beiden Umlenkhalter 9 und 10 mit den Umlenkspiegeln angeordnet. Ein von einem der beiden Ultraschallwandler 13 oder 14 erzeugtes Schallsignal wird an dem diesem Ultraschallwandler 13 oder 14 zugeordneten Umlenkspiegel umgelenkt, so dass es sich danach im Wesentlichen parallel zur Durchflussrichtung 3 ausbreitet und die Messstrecke 8 durchläuft. Am gegenüberliegenden Ende der Messtrecke 8 wird das Schallsignal am anderen der beiden Umlenkspiegel erneut umgelenkt, um dann vom anderen der beiden Ultraschallwandler 14 oder 13 empfangen zu werden.

Wie bereits erwähnt, sind die Ultraschallwandler 13 und 14 jeweils sowohl als Schallsender als auch als Schallempfänger ausgebildet. Somit gibt es zwei entgegengesetzt orientierte Schallausbreitungsrichtungen, nämlich zum einen im Wesentlichen in Durchflussrichtung 3 und zum anderen im Wesentlichen entgegen der Durchflussrichtung 3. Insbesondere können beispielsweise impulsförmige Schallsignale in Durchflussrichtung 3 und entgegen der Durchflussrichtung 3 in die Messstrecke 8 eingespeist werden. Aus der Laufzeitdifferenz dieser beiden entgegengesetzt orientierten Schallsignale wird dann in einer nicht näher gezeigten Auswerteeinheit die Durchflussmenge des Mediums ermittelt.

Die Gehäuse-Innenwand 15 hat eine Gehäuse-Montagenut 16, die senkrecht zur Durchflussrichtung 3 orientiert ist. Ebenso weist der zentrale Hauptabschnitt 7 des Messeinsatzes 4 eine Messeinsatz-Außenwand 17 mit einer senkrecht zur Durchflussrichtung 3 verlaufenden Messeinsatz-Montagenut 18 auf. Die Messeinsatz-Montagenut 18 verläuft tangential bezogen auf die Durchflussrichtung 3 und umgibt den zentralen Hauptabschnitt 7 des Messeinsatzes 4 vollständig. Ein Sicherungselement 19 in Gestalt eines federnd elastischen Schnapprings befindet sich im in Fig. 1 gezeigten montierten Zustand der Durchflussmesseinrichtung 1 mit einem ersten Teilbereich innerhalb der Gehäuse-Montagenut 16 und mit einem anderen zweiten Teilbereich innerhalb der Messeinsatz-Montagenut 18. Im montierten Zustand sind das Gehäuse 2 und der darin eingesetzte Messeinsatz 4 axial, also in Durchflussrichtung 3, in einer relativ zueinander ausgerichteten Position. Das Sicherungselement 19 sichert und fixiert das Gehäuse 2 und den darin eingesetzten Messeinsatz 4 in dieser axial relativ zueinander ausgerichteten Position.

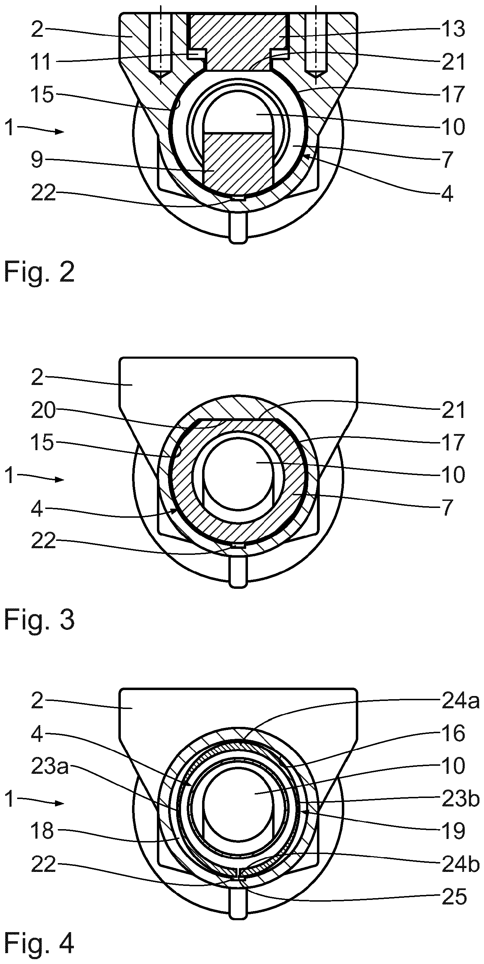

In Fig. 2 bis 4 sind drei verschiedene Querschnitte durch die Durchflussmesseinrichtung 1 gezeigt. In Fig. 2 ist ein erster Querschnitt auf Höhe des ersten Ultraschallwandlers 13 (siehe Querschnitt II - II gemäß Fig. 1), in Fig. 3 ein zweiter Querschnitt innerhalb der vorderen Hälfte des zentralen Hauptabschnitts 7 des Messeinsatzes 4 (siehe Querschnitt III - III gemäß Fig. 1) und in Fig. 3 ein dritter Querschnitt mitten durch die Gehäuse-Montagenut 16, die Messeinsatz-Montagenut 18 und das darin eingesetzte Sicherungselement 19 (siehe Querschnitt IV - IV gemäß Fig. 1) dargestellt.

Aus der Darstellung des zweiten Querschnitts in Fig. 3 ist ersichtlich, dass die Gehäuse-Innenwand 15 einen abgeflachten Bereich 20 hat, der bei dem gezeigten Ausführungsbeispiel an der gleichen Umfangsposition wie die Ultraschallwandler 13 und 14 - in den Darstellungen gemäß Fig. 2 bis 4 oben - angeordnet ist. Die Gehäuse-Montagenut 16 verläuft bei dem gezeigten Ausführungsbeispiel ausschließlich innerhalb dieses abgeflachten Bereichs 20 der Gehäuse-Innenwand 15 (siehe Fig. 4). Der abgeflachte Bereich 20 erstreckt sich nach innen hin und verkleinert verglichen mit einer exakt hohlzylindrischen Innengeometrie den freien Durchgangsbereich innerhalb des Gehäuses 2 zumindest dort, wo der Messeinsatz 4 im gezeigten montierten Zustand platziert ist. Aufgrund des abgeflachten Bereichs 20 hat die Gehäuse-Innenwand 15 keine exakt hohlzylindrische Innengeometrie. Der Messeinsatz 4 hat an seiner Messeinsatz-Außenwand 17 eine zum abgeflachten Bereich 20 der Gehäuse-Innenwand 15 korrespondierende Abflachung 21 (siehe Fig. 2 und 3). Der abgeflachte Bereich 20 der Gehäuse-Innenwand 15 und die korrespondierende Abflachung 21 am Messeinsatz 4 bewirken in ihrem formschlüssigen Zusammenspiel, dass der Messeinsatz 4 nur in der gewünschten Verdrehstellung in das Gehäuse 2 eingesetzt werden kann. Auf diese Weise sind das Gehäuse 2 und der Messeinsatz 4 im montierten Zustand in tangentialer Richtung (= Richtung einer Rotation um die Durchflussrichtung 3) relativ zueinander ausgerichtet und in dieser zueinander ausgerichteten tangentialen Position fixiert. Ausrichtung und Fixierung erfolgen jeweils formschlüssig.

Dem gleichen Zweck dient eine Axialnut 22 in der Gehäuse-Innenwand 15, die bei dem gezeigten Ausführungsbeispiel dem abgeflachten Bereich 20 gegenüberliegenden (= unten in Fig. 2 bis 4) angeordnet ist. Ein bei einem nicht gezeigten alternativen Ausführungsbeispiel in diesem unteren Bereich am Messeinsatz 4 optional zusätzlich vorhandener korrespondierender Axialsteg greift formschlüssig in diese Axialnut 22 ein und bewirkt somit ebenfalls eine tangentiale Ausrichtung und Fixierung des Messeinsatzes 4 und des Gehäuses 2 relativ zueinander.

Gemäß der Querschnittsdarstellung von Fig. 4 hat das Sicherungselement 19 Teilbereiche mit jeweils unterschiedlicher Elementdicke, wobei die Dickenrichtung die senkrecht zur Durchflussrichtung 3 verlaufende radiale Richtung ist. Das Sicherungselement 19 hat zwei erste Dicken-Teilbereiche 23a, 23b mit einer kleineren Elementdicke und zwei zweite Dicken-Teilbereiche 24a, 24b mit einer größeren Elementdicke. Die dünneren ersten Dicken-Teilbereiche 23a, 23b wechseln sich mit den dickeren zweiten Dicken-Teilbereiche 24a, 24b ab. Bei dem gezeigten Ausführungsbeispiel sind die dickeren zweiten Dicken-Teilbereiche 24a, 24b etwa doppelt so dick wie die dünneren ersten Dicken-Teilbereiche 23a, 23b. Die ersten und zweiten Dicken-Teilbereiche 23a, 23b, 24a, 24b sind senkrecht zur Durchflussrichtung 3, also in Umfangsrichtung, gleichmäßig verteilt angeordnet. Der obere dickere zweite Dicken-Teilbereich 24a des Sicherungselements 19 verläuft dabei innerhalb der Gehäuse-Montagenut 16 im abgeflachten Bereich 20 der Gehäuseinnenwand 15, während die übrigen (Teil-)Bereiche des Sicherungselements 19, also die beiden dünneren ersten Dicken-Teilbereiche 23a, 23b und der untere dickere zweite Dicken-Teilbereich 24b, hauptsächlich innerhalb der Messeinsatz-Montagenut 18 verlaufen. Der Eingriff ist jeweils wiederum formschlüssig.

Die dickeren zweiten Dicken-Teilbereiche 24a, 24b sind primär zur Fixierung des Sicherungselements 19 an bzw. in der Gehäuse-Montagenut 16 und der Messeinsatz-Montagenut 18 bestimmt.

Dagegen bewirken die dünneren ersten Dicken-Teilbereiche 23a, 23b, dass das Sicherungselement 19 elastisch ist und ein federndes Verhalten hat. Letzteres ist für die Montage von Vorteil. Das Sicherungselement 19 ist im unteren zweiten Dicken-Teilbereich 24b offen und hat dort einen Öffnungsspalt 25, so dass es aufgebogen und im Bereich der Messeinsatz-Montagenut 18 über die Messeinsatz-Außenwand 17 geschoben werden kann. Aufgrund des federnden Verhaltens schnappt das Sicherungselement 19 wieder zu, sobald es über die Messeinsatz-Außenwand 17 geschoben worden ist. Außerdem ermöglicht das federnde Verhalten, dass das Sicherungselement 19 zum Einschieben des Messeinsatzes 4 in das Gehäuse 2 im Wesentlichen vollständig in die Messeinsatz-Montagenut 18 hineingedrückt werden kann. Das Sicherungselement 19 schnappt federnd nach au-βen und rastet mit seinem oberen zweiten Dicken-Teilbereich 24a in die Gehäuse-Montagenut 16 ein, sobald es im Zuge des Einschiebevorgangs an deren axialer Position angelangt ist. Dann greift das Sicherungselement 19 sowohl in die Messeinsatz-Montagenut 18 als auch in die Gehäuse-Montagenut 16 ein und sichert und fixiert das Gehäuse 2 und den Messeinsatz 4 in dieser axial zueinander ausgerichteten Position.

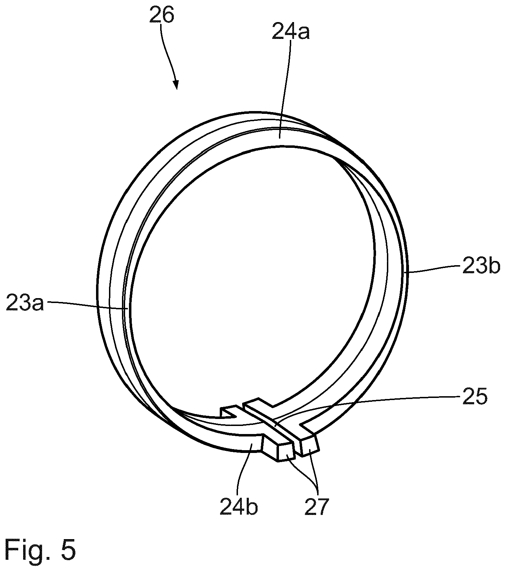

In Fig. 5 ist ein Ausführungsbeispiel eines weiteren Sicherungselements 26 gezeigt. Es ist ebenfalls als Schnappring ausgestaltet, hat aber im Bereich des Öffnungsspalts 25 zusätzlich zwei axiale Sicherungselement-Positionierungsstege 27. Ansonsten ist es ähnlich zu dem Sicherungselement 19 aufgebaut und hat ebenfalls zwei dünnere erste Dicken-Teilbereiche 23a, 23b sowie zwei dickere zweite Dicken-Teilbereiche 24a, 24b. Aufgrund der Sicherungselement-Positionierungsstege 27 ergeben sich zwei zusätzliche Anwendungsfälle.

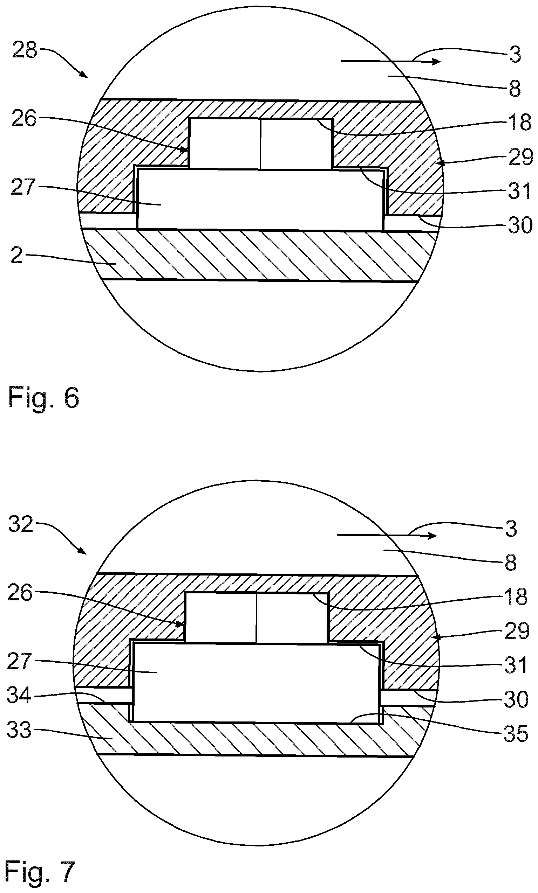

Der erste Anwendungsfall des Sicherungselements 26 ist in Fig. 6 für ein nur ausschnittsweise (siehe in Fig. 1 mit VI gekennzeichneter Ausschnitt) vergrößert dargestelltes Ausführungsbeispiel einer Durchflussmesseinrichtung 28 gezeigt. Diese Durchflussmesseinrichtung 28 hat einen Messeinsatz 29, dessen Messeinsatz-Außenwand 30 zusätzlich zu der tangentialen Messeinsatz-Montagenut 18 zwei in Durchflussrichtung 3 verlaufende Messeinsatz-Axialnuten 31 aufweist. Die Messeinsatz-Axialnuten 31 korrespondieren zu den beiden axiale Sicherungselement-Positionierungsstegen 27 des Sicherungselements 26. Wenn das Sicherungselement 26 am Messeinsatz 29 platziert ist, greift jeder der beiden Sicherungselement-Positionierungsstege 27 formschlüssig in jeweils eine der beiden Messeinsatz-Axialnuten 31 ein. Dann ist das Sicherungselement 26 in tangentialer Richtung auf dem Messeinsatz 29 ausgerichtet und in dieser tangential ausgerichteten Position fixiert. Dadurch ist gewährleistet, dass stets der dafür vorgesehene besonders stabile obere dickere zweite Teilbereich 24a in die Gehäuse-Montagenut 16 eingreift. Ein insofern unerwünschtes Verdrehen oder Verschieben des ansonsten im Wesentlichen runden Sicherungselements 26 innerhalb der Messeinsatz-Montagenut 18 wird so sicher ausgeschlossen.

Der zweite Anwendungsfall des Sicherungselements 26 ist in Fig. 7 für ein ebenfalls nur ausschnittsweise (siehe in Fig. 1 mit VII gekennzeichneter Ausschnitt) vergrößert dargestelltes weiteres Ausführungsbeispiel einer Durchflussmesseinrichtung 32 gezeigt. Im Unterschied zu der Durchflussmesseinrichtung 28 gemäß Fig. 6 hat die Durchflussmesseinrichtung 32 auch ein Gehäuse 33, an dessen Gehäuse-Innenwand 34 zwei zusätzliche in Durchflussrichtung 3 verlaufende Gehäuse-Axialnuten 35 vorhanden sind, welche ebenfalls zu den beiden axialen Sicherungselement-Positionierungsstegen 27 des Sicherungselements 26 korrespondieren. Wenn sich das Gehäuse 33 und der Messeinsatz 29 im montierten Zustand mit zueinander ausgerichteter und fixierter Position befinden, greift jeweils ein erster Teilbereich jedes der beiden Sicherungselement-Positionierungsstege 27 in eine der beiden Messeinsatz-Axialnuten 31 und ein zweiter Teilbereich jedes der beiden Sicherungselement-Positionierungsstege 27 in eine der beiden Gehäuse-Axialnuten 35 ein. Auf diese Weise sind das Gehäuse 33 und der Messeinsatz 29 zusätzlich senkrecht zur Durchflussrichtung 3, also tangential, zueinander ausgerichtet und fixiert.

Insgesamt bietet jede der Durchflussmesseinrichtungen 1, 28 und 32 den Vorteil einer einfachen und kostengünstigen Montage des Messeinsatzes 4 bzw. 29 innerhalb des Gehäuses 2 bzw. 33, wobei aufgrund des verwendeten Sicherungselements 19 bzw. 26 zugleich in sehr effizienter Weise eine zumindest in axialer Richtung ausgerichtete Fixierung des Messeinsatzes 4 bzw. 29 relativ zum Gehäuse 2 bzw. 33 gegeben ist. Aufgrund der bevorzugten weiteren Maßnahmen, wie z.B. bereichsweise Abflachung der ansonsten (hohl)zylindrischen Geometrie, ist zusätzlich auch eine in tangentialer Richtung ausgerichtete Fixierung beider Komponenten vorhanden.

## Patentansprüche

1. Durchflussmesseinrichtung für ein flüssiges oder gasförmiges Medium mit einem Gehäuse (2; 33) und einem in das Gehäuse (2; 33) einsetzbaren und eine Messtrecke (8) aufweisenden Messeinsatz (4; 29), wobei
a) der Messeinsatz (4; 29) eine Durchflussrichtung (3) hat, in der das zu erfassende Medium während des Betriebs die Messstrecke (8) durchströmt,
b1) das Gehäuse (2; 33) eine Gehäuse-Innenwand (15; 34) aufweist, **dadurch gekennzeichnet, dass**
b2) die Gehäuse-Innenwand (15; 34) mit einer senkrecht zur Durchflussrichtung (3) verlaufenden Gehäuse-Montagenut (16) ausgestattet ist,
c) der Messeinsatz (4; 29) eine Messeinsatz-Außenwand (17; 30) aufweist, und die Messeinsatz-Außenwand (17; 30) mit einer senkrecht zur Durchflussrichtung (3) verlaufenden Messeinsatz-Montagenut (18) ausgestattet ist, und
d) das Gehäuse (2; 33) und der Messeinsatz (4; 29) im montierten Zustand zumindest in Durchflussrichtung (3) relativ zueinander ausgerichtet sind und mittels eines Sicherungselements (19; 26) in der zueinander ausgerichteten Position fixiert sind, wobei zur Fixierung des Gehäuses (2; 33) und des Messeinsatzes (4; 29) in der zueinander ausgerichteten Position zumindest ein erster Teilbereich (24a) des Sicherungselements (19; 26) in die Gehäuse-Montagenut (16) und zumindest ein zweiter Teilbereich (23a, 23b, 24b) des Sicherungselements (19; 26) in die Messeinsatz-Montagenut (18) eingreift.

2. Durchflussmesseinrichtung nach Anspruch 1, **dadurch gekennzeichnet, dass** die Gehäuse-Montagenut (16) zumindest in einem abgeflachten Bereich (20) der Gehäuse-Innenwand (15; 34) angeordnet ist.

3. Durchflussmesseinrichtung nach Anspruch 1 oder 2, **dadurch gekennzeichnet, dass** die Messeinsatz-Montagenut (18) den Messeinsatz (4; 29) in einer Richtung senkrecht zur Durchflussrichtung (3) zumindest teilweise umgibt.

4. Durchflussmesseinrichtung nach einem der vorhergehenden Ansprüche, **dadurch gekennzeichnet, dass** das Sicherungselement (19; 26) die Messtrecke (8) umgibt.

5. Durchflussmesseinrichtung nach einem der vorhergehenden Ansprüche, **dadurch gekennzeichnet, dass** das Sicherungselement (19; 26) Sicherungselement-Teilbereiche (23a, 23b, 24a, 24b) mit unterschiedlicher Elementdicke aufweist.

6. Durchflussmesseinrichtung nach einem der vorhergehenden Ansprüche, **dadurch gekennzeichnet, dass** das Sicherungselement (19; 26) mindestens einen ersten Dicken-Teilbereich (23a, 23b) mit einer kleineren Elementdicke und mindestens einen zweiten Dicken-Teilbereich (24a, 24b) mit einer größeren Elementdicke aufweist.

7. Durchflussmesseinrichtung nach Anspruch 6, **dadurch gekennzeichnet, dass** sich die ersten und zweiten Dicken-Teilbereiche (23a, 23b, 24a, 24b) abwechseln.

8. Durchflussmesseinrichtung nach Anspruch 6 oder 7, **dadurch gekennzeichnet, dass** die ersten und zweiten Dicken-Teilbereiche (23a, 23b, 24a, 24b) in einer Richtung senkrecht zur Durchflussrichtung (3) gleichmäßig verteilt angeordnet sind.

9. Durchflussmesseinrichtung nach einem der Ansprüche 6 bis 8, **dadurch gekennzeichnet, dass** das Sicherungselement genau zwei erste Dicken-Teilbereiche (23a, 23b) und genau zwei zweite Dicken-Teilbereiche (24a, 24b) aufweist.

10. Durchflussmesseinrichtung nach einem der vorhergehenden Ansprüche, **dadurch gekennzeichnet, dass** die Messeinsatz-Außenwand (30) zumindest eine zusätzliche in Durchflussrichtung (3) verlaufende Messeinsatz-Axialnut (31) und das Sicherungselement (26) zumindest einen in Durchflussrichtung (3) verlaufenden zusätzlichen Sicherungselement-Positionierungssteg (27) hat, wobei bei am Messeinsatz (29) platzierten Sicherungselement (26) der zumindest eine Sicherungselement-Positionierungssteg (27) in die zumindest eine Messeinsatz-Axialnut (31) eingreift, so dass sich das Sicherungselement (26) in einer senkrecht zur Durchflussrichtung (3) ausgerichteten und fixierten Position auf dem Messeinsatz (29) befindet.

11. Durchflussmesseinrichtung nach einem der vorhergehenden Ansprüche, **dadurch gekennzeichnet, dass** die Gehäuse-Innenwand (34) zumindest eine zusätzliche in Durchflussrichtung (3) verlaufende Gehäuse-Axialnut (35), die Messeinsatz-Außenwand (30) zumindest eine zusätzliche in Durchflussrichtung (3) verlaufende Messeinsatz-Axialnut (31) und das Sicherungselement (26) zumindest einen in Durchflussrichtung (3) verlaufenden zusätzlichen Sicherungselement-Positionierungssteg (27) hat, wobei in der zueinander ausgerichteten und fixierten Position des Gehäuses (33) und des Messeinsatzes (29) zumindest ein Teil des zumindest einen Sicherungselement-Positionierungsstegs (27) jeweils in die zumindest eine Gehäuse-Axialnut (35) und in die zumindest eine Messeinsatz-Axialnut (31) eingreift, so dass das Gehäuse (33) und der Messeinsatz (29) auch senkrecht zur Durchflussrichtung (3) zueinander ausgerichtet und fixiert sind.

## Claims

1. A flowmeter for a liquid or gaseous medium having a housing (2; 33) and a measurement insert (4; 29) which can be inserted into the housing (2; 33) and which has a measurement section (8), wherein
a) the measurement insert (4; 29) has a throughflow direction (3) in which the medium which is to be detected flows through the measurement section (8) during operation,
b1) the housing (2; 33) has a housing inner wall (15; 34),
**characterised in that**
b2) the housing inner wall (15; 34) is equipped with a housing assembly groove (16) which extends perpendicularly to the throughflow direction (3),
c) the measurement insert (4; 29) has a measurement insert outer wall (17; 30), and the measurement insert outer wall (17; 30) is equipped with a measurement insert assembly groove (18) which extends perpendicularly to the throughflow direction (3), and
d) the housing (2; 33) and the measurement insert (4; 29) in the assembled state are orientated relative to each other at least in the throughflow direction (3) and are fixed in the position orientated with respect to each other by means of a securing element (19; 26), wherein, in order to fix the housing (2; 33) and the measurement insert (4; 29) in the position orientated with respect to each other, at least a first part-region (24a) of the securing element (19; 26) engages in the housing assembly groove (16) and at least a second part-region (23a, 23b, 24b) of the securing element (19; 26) engages in the measurement insert assembly groove (18).

2. The flowmeter according to claim 1, **characterised in that** the housing assembly groove (16) is arranged at least in a flattened region (20) of the housing inner wall (15; 34).

3. The flowmeter according to claim 1 or 2, **characterised in that** the measurement insert assembly groove (18) at least partially surrounds the measurement insert (4; 29) in a direction perpendicular to the throughflow direction (3).

4. The flowmeter according to any one of the preceding claims, **characterised in that** the securing element (19; 26) surrounds the measurement section (8).

5. The flowmeter according to any one of the preceding claims, **characterised in that** the securing element (19; 26) has securing element part-regions (23a, 23b, 24a, 24b) with a different element thickness.

6. The flowmeter according to any one of the preceding claims, **characterised in that** the securing element (19; 26) has at least a first thickness part-region (23a, 23b) with a smaller element thickness and at least a second thickness part-region (24a, 24b) with a greater element thickness.

7. The flowmeter according to claim 6, **characterised in that** the first and second thickness part-regions (23a, 23b, 24a, 24b) alternate with each other.

8. The flowmeter according to claim 6 or 7, **characterised in that** the first and second thickness part-regions (23a, 23b, 24a, 24b) are arranged in a uniformly distributed manner in a direction perpendicular to the throughflow direction (3).

9. The flowmeter according to any one of claims 6 to 8, **characterised in that** the securing element has precisely two first thickness part-regions (23a, 23b) and precisely two second thickness part-regions (24a, 24b).

10. The flowmeter according to any one of the preceding claims, **characterised in that** the measurement insert outer wall (30) has at least one additional measurement insert axial groove (31) which extends in the throughflow direction (3) and the securing element (26) has at least one additional securing element positioning web (27) which extends in the throughflow direction (3), wherein, at the securing element (26) placed on the measurement insert (29), the at least one securing element positioning web (27) engages in the at least one measurement insert axial groove (31) so that the securing element (26) is located on the measurement insert (29) in a position which is orientated and fixed perpendicularly to the throughflow direction (3).

11. The flowmeter according to any one of the preceding claims, **characterised in that** the housing inner wall (34) has at least one additional housing axial groove (35) which extends in the throughflow direction (3), the measurement insert outer wall (30) has at least one additional measurement insert axial groove (31) which extends in the throughflow direction (3) and the securing element (26) has at least one additional securing element positioning web (27) which extends in the throughflow direction (3), wherein, in the position in which the housing (33) and the measurement insert (29) are orientated and fixed with respect to each other, at least a portion of the at least one securing element positioning web (27) engages, respectively, in the at least one housing axial groove (35) and in the at least one measurement insert axial groove (31) so that the housing (33) and the measurement insert (29) are also orientated and fixed with respect to each other perpendicularly to the throughflow direction (3).

## Revendications

1. Débitmètre pour un milieu liquide ou gazeux, comportant un boîtier (2 ; 33) et un insert de mesure (4 ; 29) qui peut être inséré dans le boîtier (2 ; 33) et qui présente une section de mesure (8), dans lequel
a) l'insert de mesure (4 ; 29) présente un sens d'écoulement (3) dans lequel, pendant le fonctionnement, le milieu à mesurer traverse la section de mesure (8),
b1) le boîtier (2 ; 33) présente une paroi de boîtier intérieure (15 ; 34),
**caractérisé en ce que**
b2) la paroi de boîtier intérieure (15 ; 34) est équipée d'une rainure de montage de boîtier (16) s'étendant perpendiculairement au sens d'écoulement (3),
c) l'insert de mesure (4 ; 29) présente une paroi extérieure d'insert de mesure (17 ; 30), et la paroi d'insert de mesure extérieure (17 ; 30) est équipée d'une rainure de montage d'insert de mesure (18) s'étendant perpendiculairement au sens d'écoulement (3), et
d) à l'état monté, le boîtier (2 ; 33) et l'insert de mesure (4 ; 29) sont alignés mutuellement au moins dans le sens d'écoulement (3) et sont fixés dans la position d'alignement mutuel au moyen d'un élément de fixation (19 ; 26), pour la fixation du boîtier (2 ; 33) et de l'insert de mesure (4 ; 29) en position d'alignement mutuel, au moins une première zone partielle (24a) de l'élément de fixation (19 ; 26) étant enclenchée dans la rainure de montage de boîtier (16) et au moins une deuxième zone partielle (23a, 23b, 24b) de l'élément de fixation (19 ; 26) étant enclenchée dans la rainure de montage d'insert de mesure (18).

2. Débitmètre selon la revendication 1, **caractérisé en ce que** la rainure de montage de boîtier (16) est disposée au moins dans une zone aplanie (20) de la paroi de boîtier intérieure (15 ; 34).

3. Débitmètre selon la revendication 1 ou 2, **caractérisé en ce que** la rainure de montage d'insert de mesure (18) entoure au moins partiellement l'insert de mesure (4 ; 29) dans un sens perpendiculaire au sens d'écoulement (3).

4. Débitmètre selon l'une des revendications précédentes, **caractérisé en ce que** l'élément de fixation (19 ; 26) entoure la section de mesure (8).

5. Débitmètre selon l'une des revendications précédentes, **caractérisé en ce que** l'élément de fixation (19 ; 26) présente des zones partielles d'élément de fixation (23a, 23b, 24a, 24b) ayant des épaisseurs d'élément différentes.

6. Débitmètre selon l'une des revendications précédentes, **caractérisé en ce que** l'élément de fixation (19 ; 26) présente au moins une première zone partielle d'épaisseur (23a, 23b) présentant une moindre épaisseur d'élément, et au moins une deuxième zone partielle d'épaisseur (24a, 24b) présentant une épaisseur d'élément supérieure.

7. Débitmètre selon la revendication 6, **caractérisé en ce que** les premières et deuxièmes zones partielles d'épaisseur (23a, 23b, 24a, 24b) sont alternées.

8. Débitmètre selon la revendication 6 ou 7, **caractérisé en ce que** les premières et deuxièmes zones partielles d'épaisseur (23a, 23b, 24a, 24b) sont disposées de manière uniformément répartie dans un sens perpendiculaire au sens d'écoulement (3).

9. Débitmètre selon l'une des revendications 6 à 8, **caractérisé en ce que** l'élément de fixation présente exactement deux premières zones partielles d'épaisseur (23a, 23b) et exactement deux deuxièmes zones partielles d'épaisseur (24a, 24b).

10. Débitmètre selon l'une des revendications précédentes, **caractérisé en ce que** la paroi d'insert de mesure extérieure (30) présente au moins une rainure axiale d'insert de mesure (31) supplémentaire s'étendant dans le sens d'écoulement (3) et l'élément de fixation (26) présente au moins une bande de positionnement d'élément de fixation (27) supplémentaire s'étendant dans le sens d'écoulement (3), l'au moins une bande de positionnement d'élément de fixation (27) étant enclenchée dans l'au moins une rainure axiale d'insert de mesure (31) au niveau de l'élément de fixation (26) placé sur l'insert de mesure (29), de telle manière que l'élément de fixation (26) se trouve sur l'insert de mesure (29) dans une position fixée et alignée perpendiculairement au sens d'écoulement (3).

11. Débitmètre selon l'une des revendications précédentes, **caractérisé en ce que** la paroi de boîtier intérieure (34) présente au moins une rainure axiale de boîtier supplémentaire (35) s'étendant dans le sens d'écoulement (3), la paroi d'insert de mesure extérieure (30) présente au moins une rainure axiale d'insert de mesure (31) supplémentaire s'étendant dans le sens d'écoulement (3) et l'élément de fixation (26) présente au moins une bande de positionnement d'élément de fixation (27) supplémentaire s'étendant dans le sens d'écoulement (3), au moins une partie de l'au moins une bande de positionnement d'élément de fixation (27) étant enclenchée respectivement dans l'au moins une rainure axiale de boîtier (35) et dans l'au moins une rainure axiale d'insert de mesure (31), dans la position mutuellement alignée et fixée du boîtier (33) et de l'insert de mesure (29), de telle manière que le boîtier (33) et l'insert de mesure (29) sont également mutuellement alignés et fixés perpendiculairement au sens d'écoulement (3).
